# EUROPEAN PATENT APPLICATION

(11) **EP 0 623 531 A2**
(43) Date of publication of application: **09.11.1994**
(21) Application number: 94201121.4
(22) Date of filing: 23.04.1994
(51) Int. Cl.: B65G 21/14

(54) **An improvement in a stocking belt conveyor**

(30) Priority: 06.05.1993 IT MI930913
(71) Applicant: BARILLA G. e R. F.lli - Società per Azioni, I-43100 Parma (IT)
(72) Inventor: Fontanesi, Enzo, I-43030 Rico'-Parma (IT)
(74) Representative: Vannini, Torquato

(57) **Abstract**

In a stocking belts conveyor (1) an improvement is provided for avoiding the belts (25, 26) from sagging when the loading sections (25a, 25b) of their paths (P1, P2) are lengthened in order to vary the operating configuration of the conveyor (1). More particularly, the improvement consists of a flexible element (50) which comprises a pair of parallel chains (57) which support between them a plurality of rotatable rods (58); the flexible element (50) is guided along a path (P3) defined by a series of drive rollers (60, 60a, 60b) and extends between two ends (50a, 50b) fixed to an upper trolley (15) of the conveyor (1) so as to be able to support the said loading sections (25a, 25b) in the various operating configurations thereof.

## Description

The present invention relates in general to a belt conveyor intended in particular, but not exclusively, for the transport of food products in general.

In the field of the production of food products, and in particular in the field of baked products such as toast slices, biscuits and the like, the use of stocking conveyors is known; these offer the advantage that their length is variable at the section of the belts where the products are loaded. In practice, this allows the surface on which the toast, biscuits, etc. are loaded to be varied, thus adapting the operation of the entire conveyor to varying conditions of production; in particular, the operational flexibility of a conveyor thus conceived allows the time that the products remain on it to be increased, thereby providing a useful stocking space for them along the production line.

In one embodiment, a stocking belt conveyor of the type referred to above comprises essentially a pair of trolleys, an upper and a lower one respectively, which run parallel to each other along corresponding guides mounted on a support structure; the respective ends of two conveyor belts are mounted on these trolleys with their paths determined by a series of support and drive rollers also mounted on the structure.

By moving the trolleys along their guides, one is able to vary the lengths of the sections of the belts onto which the products to be conveyed are loaded.

However, a recognised problem which limits the operation of conveyors of the type just described is that the loading section of each belt sags when its length is increased as a result of the movement of the trolleys; it is evident that, as a result of this lengthening, the loading sections of the belts are more exposed to deformation due to the weight of the products. However, as the operating configuration of the conveyor is variable, it is somewhat difficult to overcome this problem in a way which is efficient and adaptable to different circumstances.

In particular, the present invention relates to an improvement in a stocking belt conveyor of the type including a support structure, an upper trolley and a lower trolley sliding on corresponding guides mounted on the structure at respective heights, two flexible belts, each guided for movement along a respective path which extends between the trolleys and which includes a loading section for the products to be conveyed, this section extending longitudinally from the upper trolley so as to be variable between a maximum and a minimum length, both determined by the positions of the trolleys along the guides.

The specific object of the present invention is to provide a stocking belt conveyor of the type referred to, having structural and operating characteristics such as to overcome the problem described earlier; to provide, in other words, an improvement which prevents the loading section of the belt from sagging as a result of being lengthened in order to vary the operating configuration of the conveyor.

This object is achieved, according to the invention, by a conveyor of the type considered and characterised in the claims which follow.

Further characteristics and the advantages of the present invention, will become clearer from the description of one embodiment, provided hereafter purely by way of non-limitative example with reference to the appended drawings, in which:
Figure 1 is a sectioned side view of a conveyor according to the invention, in a first operating configuration;
Figure 2 is a sectioned side view of a conveyor according to the invention, in a second operating configuration; and
Figure 3 shows a cross section of a detail of the conveyor according to the invention, taken along the line III-III of Figure 1.

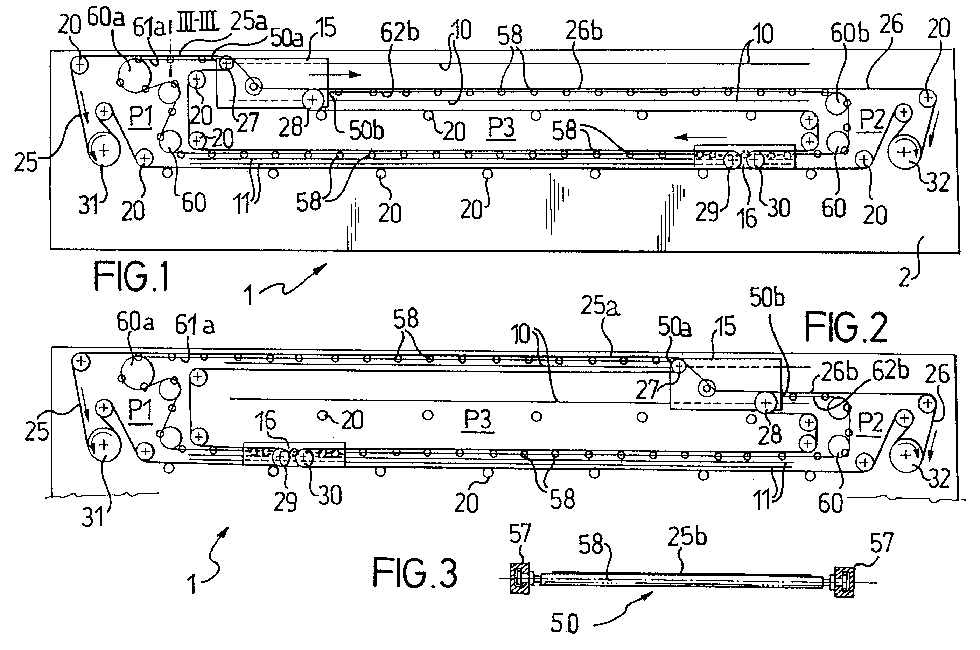

With reference to the above drawings and in particular to Figure 1, a conveyor according to the invention is generally indicated 1 and includes a fixed support structure 2 on which two pairs of guides 10 and 11 are mounted, the first being in an upper position and the second in a lower position in relation to the structure 2.

These guides are provided to guide the movement of respective trolleys 15 and 16.

A first plurality of rollers 20 is rotatably mounted on the support structure 2 of the conveyor 1 to guide a pair of belts 25 and 26 for movement along respective paths P1 and P2 which extend between the trolleys 15 and 16. For this purpose, two rollers 27 and 28, 29 and 30, respectively are provided on the trolleys 15 and 16; in addition the conveyor according to the invention has conventional drive means 31 and 32 provided to drive the belts 25 and 26 respectively and schematically illustrated in this example as drive pulleys.

The stocking conveyor just described is of a conventional type; however it is provided with an improvement according to the invention which will be described hereafter with reference also to Figures 2 and 3.

This improvement comprises a flexible element 50 having ends 50a and 50b fixed to the upper trolley 15 and which includes a pair of chains 57, of a conventional type, which rotatably support a plurality of rods 58 which extend transversely the flexible element 50. In this embodiment of the invention, the pins 58 are to advantage spaced along respective longitudinal portions of the flexible element 50 starting from the ends 50a and 50b and extending each for substantially the same length as the length of the corresponding loading section 25a and 26b of the paths P1 and P2, as will become clear from the rest of this description.

In the present embodiment of the improvement according to the invention, the flexible element 50 is guided for movement along a path P3 by a second plurality of rollers 60 rotatably supported by the structure 2 of the conveyor.

Furthermore, the flexible element 50 is held by a pair of rollers 60a and 60b of the rollers 60 against the aforementioned loading sections 25a and 26b of the paths of the belts 25 and 26, along two longitudinal portions 61a and 62b of the path P3 which extend from the ends 50a and 50b respectively; in particular, along the longitudinal sections 61a and 62b, the rods 58 of the flexible element 50 are in contact with the lower surfaces of the belts 25 and 26, while the chains 57 extend alongside them (see Figure 3).

A brief description follows of the operation of the stocking conveyor of the invention.

With reference to the operating configuration illustrated in Figure 1, the two belts 25 and 26 are driven by their respective drive means 31 and 32 in the directions shown in the drawing; in this operating configuration, the loading section 25a which extends to the left of the upper trolley 15 is shorter than the section 26b. Movement of the upper trolley 15 along its guides 10 towards the loading section 26b results in a simultaneous movement of the lower trolley 16 in the opposite direction along its guides 11, whereby the two belts 25 and 26, whose ends are fixed to these trolleys, also move; it is therefore possible to achieve an operating configuration of the conveyor like that illustrated in Figure 2.

It may be seen that the relative lengths of the sections 25a and 26b have been inverted with the greatest of ease.

During the switch in the configuration of the conveyor, the flexible element 50 moves as a result of the movement of the upper trolley 15, to which its ends 50a and 50b are fixed; in particular the lengths of the two sections 61a and 62b of the path P3 along which the rods 58 are in contact with belts 25 and 26 along the two loading sections 25a and 26b vary, adapting themselves perfectly to the new configuration of the conveyor.

The advantages provided by the improvement constituted by the invention become apparent from the description of the operation of the conveyor according to the invention.

It may be noted in fact that, as the configuration alters, the rods 58 of the flexible element uniformly support the belts along the loading sections 25a and 26b; therefore no longer sag under the weight of the products to be transported, whatever the length which has been selected for their operation will be.

It should further be noted that the rods 58, being rotably mounted in the element 50, produce substantially no friction in contacting the belts.

In addition, it should be noted that, since the rods are spaced along portions of the flexible element 50 starting from its ends 50a and 50b and extending through distances equal to the maximum lengths of the loading sections 25a and 26b of the paths of the belts 25 and 26, the element 50 will be able to adapt itself to any configuration of the conveyor; that is, the element 50 is able perfectly to support the sections 25a and 26b when each of these is at its maximum or minimum extent, as is seen easily from Figures 1 and 2.

Naturally, the example of improvement described above could have further, different embodiments; the flexible element, for example, could be made in two parts, each having two ends fixed to the trolleys 15 and 16 respectively instead of just to the trolley 15. It is clear that doing this would reproduce in practice the same teaching as the embodiment referred to in the description.

Furthermore, instead of the rods 58 it would be possible to use other, functionally equivalent elements such as slats or the like; naturally the number of rods provided in the flexible element may also be altered in accordance with the various uses for which the conveyor of the invention is intended. It is obvious that the heavier the products to be transported, the greater the number of rods that must be provided in the flexible element.

In addition, it should not be ruled out that drive rollers be used to facilitate the movement of the flexible element 50 along the path P3, which rollers would accompany the movement of the element 50 during alterations in the operating configuration of the conveyor.

Lastly, it should not be excluded either that, in the conveyor according to the invention, the improvement of the invention may provide for a single flexible element 50 intended to prevent only one of the two belts 25 and 26 from sagging; in this case, the flexible element 50 would have its ends fixed to the upper trolley 15 and the lower trolley 16 respectively, but would retain the structural and operating characteristics described above.

## Claims

1. A stocking belt conveyor (1) of the type including a support structure (2), an upper trolley (15) and a lower trolley (16) sliding on respective guides (10, 11) mounted on the support structure (2) at respective heights, two flexible belts (25, 26) each guided for movement along a respective path (P1, P2) which extends between the trolleys (15, 16) and which includes a loading section (25a, 26b) for the products to be conveyed, this section (25a, 26b) extending longitudinally from the upper trolley (15) so as to be variable in length between a maximum and a minimum, both determined by the position of the trolleys (15, 16) along the guides (10, 11), characterised in that it further includes a flexible element (50) extending between two ends (50a, 50b) fixed to the upper trolley (15) and comprising a pair of flexible chains (57) which rotatably support a plurality of rods (58) which extend transversely the flexible element (50) and are spaced along portions thereof starting from the ends (50a, 50b) and extending longitudinally for a length substantially equal to the maximum length of a corresponding loading section (25a, 26b), the flexible element (50) being guided for movement along a path (P3) having two longitudinal sections (61a, 62b) extending under the loading sections (25a, 26b) and along which the flexible element (50) is in contact with the belts (25 and 26) which rest on the rods (58).

2. A stocking belt conveyor (1) of the type which includes a support structure (2), an upper trolley (15) and a lower trolley (16) sliding on respective guides (10, 11) mounted on the structure (2) at respective heights, two flexible belts (25, 26) guided for movement each along a respective path (P1, P2) which extends between the trolleys (15, 16) and which includes a loading section (25a, 26b) for the products to be conveyed, this section (25a, 26b) extending longitudinally from the upper trolley (15) so as to be variable in length between a maximum and a minimum, both determined by the position of the trolleys (15, 16) along the guides (10, 11), characterised in that it includes at least one flexible element (50) extending between two ends (50a, 50b) fixed to the upper trolley (15) and the lower trolley (16) respectively, and comprising a pair of flexible chains (57) which rotatably support a plurality of rods (58) which extend transversely the flexible element (50) and are spaced along a portion thereby starting from one end (50a) fixed to the upper trolley (15) and extending for a length substantially equal to the maximum length of a corresponding loading section (25a, 26b), the flexible element (50) being guided for movement along a path (P3) including a longitudinal section (61a) which extends below the loading section (25a) and along which the flexible element (50) is in contact with the belt (25,26) which rests on the rods (58).
